# EUROPEAN PATENT APPLICATION

(11) **EP 4 793 763 A1**
(43) Date of publication of application: **19.08.2026**
(21) Application number: 26158284.5
(22) Date of filing: 12.02.2026
(51) Int. Cl.: G06F 8/65, G06F 9/445

(54) **SERVICE UPDATE METHOD AND HOUSEHOLD APPLIANCE CAPABLE OF SERVICE UPDATE**

(30) Priority: 13.02.2025 WO PCT/KR2025/002104
(71) Applicant: LG Electronics Inc., Yeongdeungpo-gu Seoul 07336 (KR)
(72) Inventor: JANG, Ilung, 08592 Seoul (KR)
(74) Representative: Schott, Jakob Valentin

(57) **Abstract**

The present invention relates to updating a service provided by a household appliance, and a method of updating a service provided by a household appliance includes communicating with a script server to determine whether a script described to provide the service is updated, downloading an updated script from the script server when the script is updated, storing the downloaded updated script in a memory, and executing the updated script stored in the memory.

## Description

### Field

The present specification relates to updating services provided by household appliances, and more specifically, to a service update method of updating only necessary components in real time without updating the entire firmware.

### Background

Modern household appliances can provide various services according to their purposes. For example, a television can provide not only a primary service of displaying broadcast videos on a monitor, but also various over-the-top (OTT) services and services such as collecting log information to generate real-time advertisements inserted during broadcasts.

To provide various services, household appliances may include various electrical and electronic components and at least one processor for controlling these components or executing programs to directly provide the services.

The at least one processor can upload and execute a set of instructions (firmware) stored in a memory to provide various services.

When changes are required to improve or update the services provided by the at least one processor, the entire firmware needs to be updated, which can be implemented through a firmware update.

To update one of various services provided by the at least one processor, a series of tasks need to be performed, such as compiling the entire program containing the updated program for the corresponding service, creating a new version of firmware, distributing the new version of firmware to each household appliance, downloading the new firmware distributed by each household appliance, and storing the new firmware in a memory. In addition, since household appliances are typically installed in every household worldwide, not only performing firmware updates for all appliances, but also performing the firmware updates in real time is difficult.

### SUMMARY

Various embodiments are directed to providing a method of allowing a household appliance to update a program for a specific service, that is, easily update a service program.

In addition, various embodiments are directed to providing a household appliance capable of performing the method of updating a service program proposed in this document.

Objects of the present document are not limited to the above-described objects, and other objects that are not described will be able to be clearly understood by those skilled in the art based on the following description.

According to various embodiments of the present disclosure, there is provided a method of updating a service provided by a household appliance, which includes communicating with a script server to determine whether a script described to provide the service is updated, downloading an updated script from the script server when the script is updated, storing the downloaded updated script in a memory, and executing the updated script stored in the memory.

The downloading of the updated script from the script server may include downloading an encrypted updated script from the script server, wherein the storing of the downloaded updated script in the memory comprises decrypting the encrypted updated script, and storing the updated script in the memory.

The communicating with the script server to determine whether the script described to provide the service is updated may include, after uploading and executing firmware stored in the memory when the household appliance is turned on by receiving power, communicating with the script server to determine whether the script described to provide the service is updated.

The communicating with the script server may include independently communicating, by a loader unit for each of a plurality of services, with the script server, which stores a script for the corresponding service, and the downloading of the updated script from the script server may include independently downloading, by the loader unit for each of the plurality of service, an updated script from the script server, which stores the script for the corresponding service.

The communicating with the script server may include communicating, by one loader unit, with the script server, which stores scripts for each of a plurality of services, and the downloading of the updated script from the script server may include downloading, by the loader unit, updated scripts from the script server, which stores the scripts for each of the plurality of services.

The executing of the updated script stored in the memory may include executing the updated script using a script library.

According to various embodiments of the present disclosure, there is provided a household appliance including hardware required to provide a service required by the household appliance, a communication unit configured to communicate with an external device, a memory in which firmware and a script are stored, and at least one processor configured to execute the firmware and the script, control the hardware and the communication unit based on the executed firmware and script to provide a service, and obtain and execute an updated script associated with the service to provide an updated service.

The at least one processor may communicate with a script server to determine whether a script described to provide the service is updated, download the updated script from the script server when the script is updated, store the downloaded updated script in the memory, and execute the updated script stored in the memory.

The at least one processor may decrypt the downloaded updated script and store the decrypted downloaded updated script in the memory.

The at least one processor may upload and execute firmware stored in the memory when receiving power and then communicate with the script server to determine whether the script described to provide the service is updated.

The at least one processor may independently execute a plurality of script-based program modules for providing a plurality of services, and each of the plurality of script-based program modules may include a loader unit configured to communicate with a first script server, which stores script for a first service provided by a corresponding program module, to determine whether a script for the first service is updated, and, when the script for the first service is updated, obtain the updated script from the first script server, decrypt the acquired script, and store the decrypted script in the memory, and an execution unit configured to obtain and execute the script stored in the memory to provide the first service.

The loader unit may transmit a signal notifying that the updated script is present to the execution unit, and when the execution unit receives the signal notifying that the updated script is present, the execution unit may acquire and execute the script stored in the memory to provide an updated first service.

The at least one processor may independently execute a plurality of script-based program modules for providing a plurality of services and a loader program module, wherein the loader program module may communicate with a second script server, which stores scripts for each of a plurality of services, determine whether the scripts for each of the plurality of services are updated, and when the updated script is present among the scripts for the plurality of services, independently obtain the updated script from the second script server, decrypt the obtained updated script, and store the decrypted script in the memory, and wherein each of the plurality of script-based program modules may include an execution unit configured to obtain and execute the script stored in the memory to provide the service.

The loader program module may transmit a signal notifying the presence of an updated script to a first script-based program module, which provides a first service corresponding to the updated script, among the plurality of script-based program modules, and when receiving the signal notifying the presence of the updated script, the execution unit of the first script-based program modules may obtain and execute the script stored in the memory to provide an updated service.

The execution unit of each of the plurality of script-based program modules may execute the script using a script library.

The service may be a service which collects logs associated with advertisements, and the updated script may be a newly written script which meets changed requirements for collecting the logs associated with the advertisements.

### BRIEF DESCRIPTION OF THE DRAWINGS

FIG. 1 is a view illustrating a simplified configuration of a household appliance according to one embodiment of the present document.
FIG. 2 is a view illustrating a method of generating firmware to update services according to one embodiment.
FIG. 3 is a view illustrating a method of updating firmware for a specific service according to various embodiments of the present document.
FIG. 4 is a view illustrating an example of a program configuration for a household appliance capable of updating service firmware based on a script according to various embodiments of the present document.
FIG. 5 is a view illustrating an example of a program configuration for a household appliance capable of updating service firmware based on a script according to various embodiments of the present document.
FIG. 6 is a flowchart illustrating a method of updating services provided by a household appliance.

### DETAILED DESCRIPTION OF THE DISCLOSURE

Advantages and features of the present disclosure and methods for achieving them will become clear with reference to embodiments described below in detail in conjunction with the accompanying drawings. However, the present disclosure is not limited to various embodiments, which will be disclosed below, but can be implemented in various different forms, the present embodiments are merely provided to make the disclosure of the present disclosure complete and fully inform those skilled in the art to which the present disclosure pertains of the scope of the present disclosure, and the present disclosure is only defined by the scope of the appended claims. The same reference number denotes the same components throughout the specification.

When a first component is "connected to" or "coupled to" a second component, it includes both a case in which the first component is directly connected or coupled to the second component or a case in which other components are interposed therebetween. On the other hand, when one component is "directly connected to" or "directly coupled to" another component, it means that still another component is not interposed therebetween. The term "and/or" includes each of stated items and any combination of one or more.

Terms used in the present specification are for describing various embodiments and are not intended to limit the present disclosure. In the present specification, the singular form also includes the plural form unless specifically stated in the phrase. As used herein, "comprises" and/or "comprising" means that the stated component, step, operation, and/or element do not preclude the presence of addition of one or more other components, steps, operations, and/or elements.

Although first, second, and the like are used to describe various components, it goes without saying that these components are not limited by these terms. These terms are only used to distinguish one component from another component.

Accordingly, it is apparent that a first component to be described below may be a second component within the technical spirit of the present disclosure. Unless otherwise defined, all terms (including technical and scientific terms) used in the specification may be used as meaning commonly understood by those skilled in the art to which the present disclosure pertains. In addition, terms defined in commonly used dictionaries are not construed ideally or excessively unless clearly and specially defined. In addition, in the drawings, thicknesses, proportions, and dimensions of components are exaggerated for effective description of technical contents. The term "and/or" includes all one or more combinations that may be defined by the associated configurations.

Hereinafter, embodiments of the present disclosure will be described in detail with reference to the accompanying drawings so that those skilled in the art to which the present disclosure pertains may easily carry out the present disclosure. However, the present disclosure may be implemented in various different forms and is not limited to embodiments described herein.

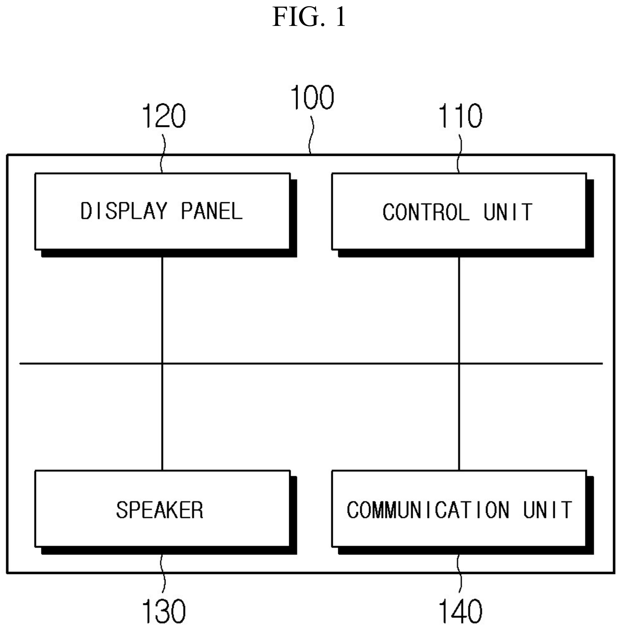

FIG. 1 is a view illustrating a simplified configuration of a household appliance according to one embodiment of the present document.

FIG. 1 illustrates a simplified configuration of a television as an example, but a method proposed in the present document is not limited to televisions and may be applied to any household appliance having at least one processor.

Referring to FIG. 1, a household appliance 100 may include a control unit 110, a display panel 120, a speaker 130, and a communication unit.

The display panel 120 is a monitor screen provided on the television and may display still or moving images output from the television. According to one embodiment, the display panel 120 may directly display broadcast images input through the communication unit 140 under the control of the control unit 110. In addition, the display panel 120 may display images generated by the control unit 110 or obtained by processing images input through the communication unit 140 by the control unit 110 under the control of the control unit 110.

The speaker 130 may output sound in conjunction with the images displayed on the display panel 120 under the control of the control unit 110.

The communication unit 140 may include both wired and wireless communication. According to one embodiment, the communication unit 140 may be connected to a cable to receive broadcast images. According to another embodiment, the communication unit 140 may be connected to an Internet protocol (IP) network in a wired or wireless manner to receive images.

In addition, the communication unit 140 may support at least one wireless communication protocol among Wi-Fi, Bluetooth, Zigbee, and an infrared receiver module to receive control signals from an external device (e.g., a remote controller, a user's mobile phone) and transmit the control signals to the control unit 110 or its own status to the external device.

The control unit 110 serves as a central control unit of a television 100 and may include at least one processor and a memory (e.g., a random access memory (RAM), a read only memory (ROM), a flash memory, a hard disk drive (HDD), etc.). The control unit 110 may also include a power management circuit, sensors, etc.

The control unit 110 may manage and control various services provided by the television through software running on the at least one processor. According to one embodiment, the at least one processor may independently control various services to be provided, allowing each service to be performed independently.

Firmware is stored in the memory of the control unit 110. The at least one processor may upload and execute the firmware stored in the memory to provide various services.

In the example of FIG. 1, the display panel 120 and the speaker 130 are provided to perform basic functions of the television, and other household appliances may include other hardware to perform their basic functions. For example, a washing machine may include hardware such as a motor, a tub, and a drum, and an air conditioner may include a motor, a condenser, blades, etc.

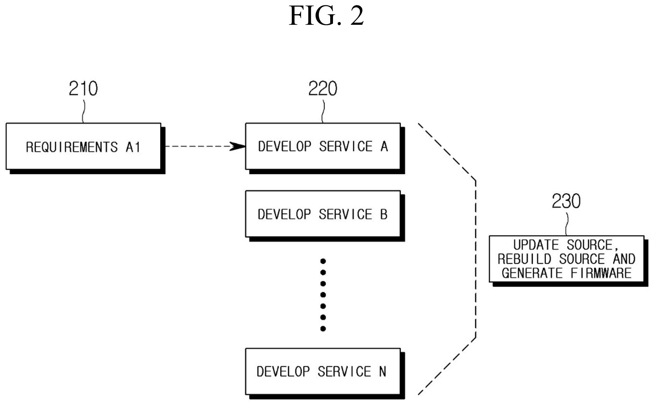

FIG. 2 is a view illustrating a method of generating firmware to update services according to one embodiment.

Referring to FIG. 2, various services provided by the household appliance 100 may be developed to meet requirements by developers providing the corresponding services. The developers may develop services by programming and testing using a programming language to meet requirements. Service codes developed by each developer are combined to create a single source code, and the entire source code may be built to generate firmware.

When requirements 210 for a specific service change, the developer may update the previously developed services 220 to meet the requirements, creating new source code for the corresponding service. In addition, the updated source code for the corresponding service is combined with the source code of other unchanged services, updating the entire source code and rebuilding the update source code to create updated firmware. The newly created firmware may be tested on all services as well as the updated service on the household appliance to check any issue, and when no issues are found, the newly created firmware may be distributed and used on household appliances worldwide.

The updated firmware may be transmitted to servers in each country once or twice a year according to a distribution process, and the household appliance 100 may update firmware by downloading the updated firmware from the download servers in each country over the Internet and storing the downloaded firmware in the memory. The firmware update method is required to rebuild the entire source code to create the updated firmware and test whether the household appliance operates without any issue in all services with the updated firmware, and thus may be set to be performed once or twice a year. Accordingly, since the firmware update method may not apply new services in real time, new requirements for specific services may not be immediately applied to the household appliance.

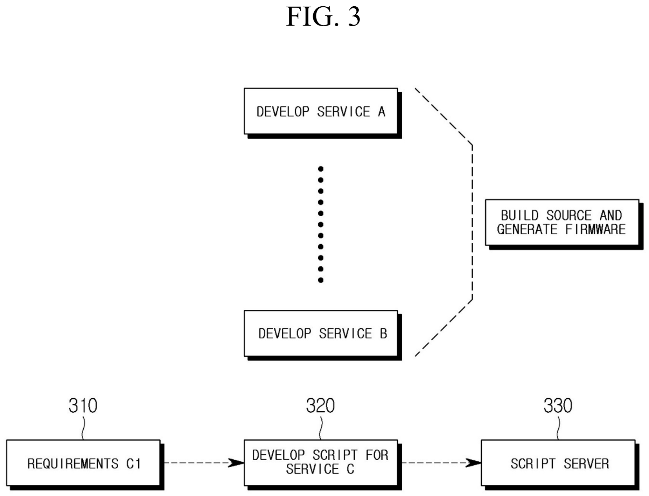

FIG. 3 is a view illustrating a method of updating firmware for a specific service according to various embodiments of the present document.

Referring to FIG. 3, in the case of the firmware presented in the present document, the basic firmware may be created by developing basic services (e.g., service A, service B) of the household appliance with unchanged requirements in the same manner as in the conventional methods to create source code, combining the created source code, and building the combined source code, as illustrated in FIG. 2. The basic firmware may include an operating system (OS), such as Web OS, which controls the hardware and system resources of the household appliance and supports general services for the program. In addition, the OS may support script libraries such as java, python, and Lua. Using these, the firmware presented in the present document may be developed using a scripting language for services whose requirements are changed in real time or frequently (e.g., service C). When requirements 310 are changed, the developer may update a script 320 to meet the changed requirements, test the updated script, and store the tested script in a script server 330. Since firmware updates using the scripts do not affect the basic services of the household appliance and the firmware associated with the basic services is not updated, no additional testing is required for the firmware associated with the basic services, and testing may be performed on only individually updated scripts. In addition, since requirements may vary by country and region, updated scripts in each country and region may be different.

The household appliance may determine whether the script is updated upon booting, and when the script is updated, the household appliance may download the corresponding script and execute the script using a script library, thereby enabling services reflecting new requirements to be reflected in real time on the household appliance.

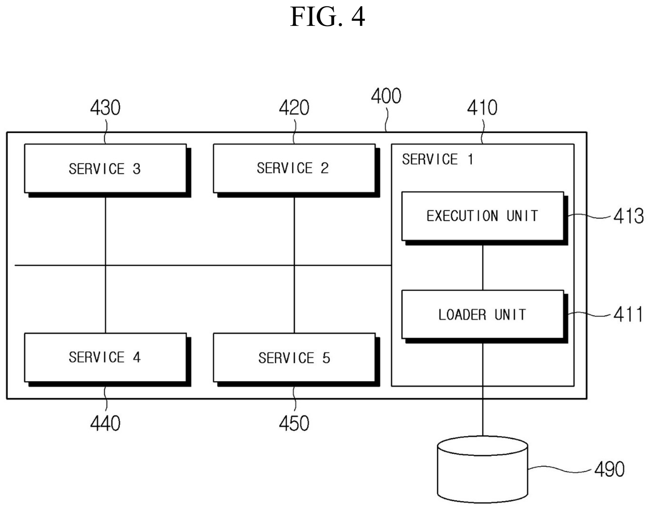

FIG. 4 is a view illustrating an example of a program configuration for a household appliance capable of updating service firmware based on a script according to various embodiments of the present document.

Referring to FIG. 4, a plurality of services 410 to 450 may be executed by at least one processor 400 of the control unit 110 of the household appliance 100. According to one embodiment, the household appliance 100 may include a plurality of processors, each of which is configured to provide a single service, and according to another embodiment, the household appliance 100 may include one or more processors, each of which is configured to independently provide a plurality of services.

Referring to FIG. 4, a service 410 (e.g., service 1) that updates firmware based on a script may include a loader unit 411 and an execution unit 413. In FIG. 4, only service 1 410 is illustrated as including the loader unit 411 and the execution unit 413, but services 2 to 5 420 to 450 may also include a loader unit and an execution unit.

The loader unit 411 may communicate with a script server 490 to determine whether the script associated with the service is updated, and when the script is updated, the loader unit 411 may download the corresponding script and store the downloaded script in a memory. According to one embodiment, the script may be encrypted and stored in the script server 490, and the loader unit 411 may download the encrypted script, decrypt the encrypted script, and store the decrypted script in the memory.

The execution unit 413 may upload a script associated with the service stored in the memory and execute the corresponding script using the script library included in the OS to provide the service.

According to one embodiment, the corresponding service may be an advertisement log service. Advertisements may be inserted into broadcast images displayed on a television, and these advertisements may be generated and inserted in real time according to the user's advertising preferences. To this end, it is necessary to identify the user's preferences for specific advertisements, and thus the advertisement log service may be performed. In this case, the advertisements inserted may vary in each country or region, the desired information may vary, and the required logs may also vary among various advertisement-related logs, and thus requirements may vary in each country or region.

The script server 490 may store scripts according to the requirements of each country or region, or a separate script server 490 may be provided for each country or region, allowing household appliances in the corresponding country or region to download the corresponding script.

Referring to FIG. 4, each service may operate independently by including the loader unit 411 and the execution unit 413. When the household appliance receives power and boots and each service resides on the OS, the loader unit 411 of each service may determine whether the script is updated or changed in the script server 490, and the service found to have an updated or changed script may download the updated or changed script from the script server 490 based on the loader unit 411 provided to each service, decrypt the downloaded script, and store the decrypted script in the memory. In addition, the loader unit 411 may request the execution unit 413 to re-upload the script stored in the memory. The execution unit 413 provided to each service may re-upload the script stored in the memory and provide the service based on the updated script.

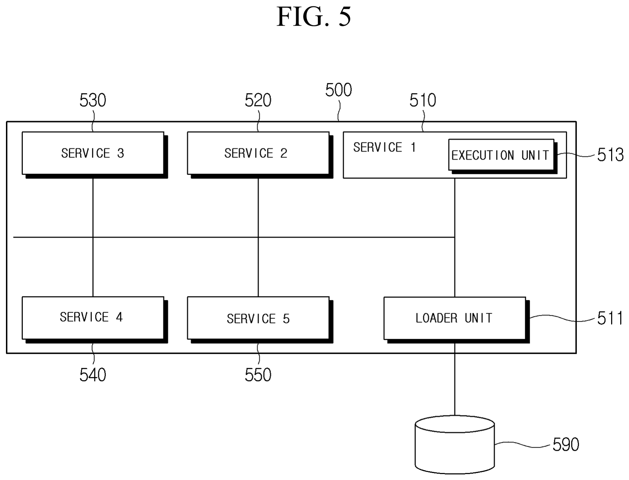

FIG. 5 is a view illustrating an example of a program configuration for a household appliance capable of updating service firmware based on a script according to various embodiments of the present document.

Referring to FIG. 5, a plurality of services 510 to 550 may be executed by at least one processor 500 of the control unit 110 of the household appliance 100. According to one embodiment, the household appliance 100 may include a plurality of processors, each of which is configured to provide a single service, and according to another embodiment, the household appliance 100 may include one or more processors, each of which is configured to independently provide a plurality of services.

Referring to FIG. 5, the service 410 (e.g., service 1) that updates firmware based on a script may include only an execution unit 513. In FIG. 5, only service 1 510 is illustrated as including the execution unit 513, but services 2 to 5 520 to 550 may also include an execution unit.

Only one loader unit 511 may be provided regardless of each service. Scripts for all service modules providing services based on scripts may be acquired and stored in a memory.

The loader unit 511 may communicate with a script server 590 to determine whether the script associated with the service is updated, and when the script is updated, the loader unit 511 may download the corresponding script and store the downloaded script in a memory for the corresponding script. According to one embodiment, the script may be encrypted and stored in the script server 590, and the loader unit 511 may download the encrypted script, decrypt the encrypted script, and store the decrypted script in the memory. In addition, in one embodiment, updated scripts may be stored in different script servers 590 for each service. Accordingly, the loader unit 511 may have an IP address of the script server 590 that stores the script for each service and access each script server 590 through the communication unit 140 to determine whether the script is updated and download the script.

When there is an updated script, the loader unit 511 may notify the execution unit of the service corresponding to the updated script that the script has been updated or instruct the execution unit to re-upload the script.

When receiving a notification indicating that the script has been updated from the loader unit 511, the execution unit 513 may re-upload the script associated with the corresponding service stored in the memory and execute the corresponding script using the script library included in the OS to provide the service.

Referring to FIG. 5, when the household appliance receives power and boots and the loader unit and each service resides on the OS, the loader unit 511 of each service may determine whether the script is updated or changed in the script server 590 corresponding to each service, and the service found to have an updated or changed script may download the updated or changed script from the script server 590, decrypt the downloaded script, and store the decrypted script in the memory. In addition, the loader unit 511 may request the execution unit 513 to newly upload the script stored in the memory or notify that the updated script has been stored in the memory. The execution unit 513 provided to each service may re-upload the script stored in the memory and provide the service based on the updated script.

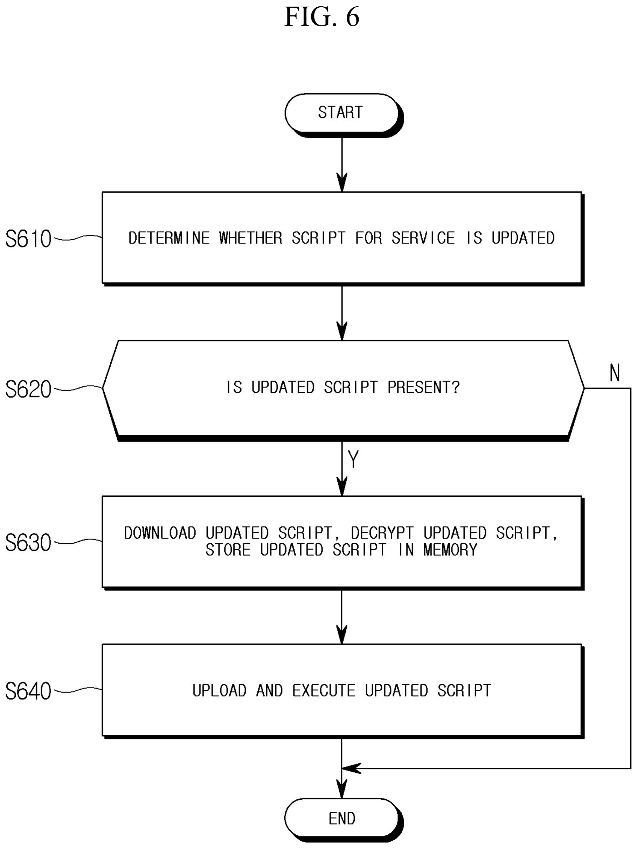

FIG. 6 is a flowchart illustrating a method of updating services provided by a household appliance.

Referring to FIG. 6, in operation S610, the household appliance 100 may determine whether an updated script for a service provided based on the script is present. According to one embodiment, the household appliance 100 may determine whether the updated script for the service is present upon power-up and booting.

According to one embodiment, the household appliance 100 may communicate with the script server that stores scripts for the service and determine whether the updated script for the service is present from the script server.

In operation S620, when it is determined that the updated script is present, in operation S630, the household appliance 100 may download the updated script from the script servers 490 and 590 and store the downloaded script in the memory. According to one embodiment, the updated script may be encrypted. Then, the household appliance 100 may download the updated script, decrypt the encrypted script, and store the decrypted script in the memory.

In operation S640, the household appliance 100 may upload and execute a newly stored script in the memory, complete a service update, and provide a service that reflects new requirements.

As described above, the method proposed in the present document allows for the execution of a program capable of providing a service whose requirements are likely to change frequently, written in a scripting language.

When requirements change, a new script is written to meet the changed requirements, stored in the memory, and executed, thereby providing a service according to the new requirements.

According to one embodiment of the present disclosure, the services provided by the household appliances can be easily updated.

According to one embodiment of the present disclosure, compared to the case of updating the entire firmware, time, labor, and financial costs can be reduced, and service updates can be performed in real time.

According to one embodiment of the present disclosure, by updating business logic whose behavior is highly likely to change in real time, it is possible to respond to market demands.

Effects obtainable from the method and apparatus proposed by the present document are not limited to the above-described effects, and other effects that are not described will be able to be clearly understood by those skilled in the art to which the present document pertains based on the following description.

Although the present disclosure has been described with reference to various embodiments illustrated in the drawings, these are merely illustrative, and those skilled in the art will understand that various modifications and other equivalent embodiments are possible therefrom. Accordingly, the true technical scope of the present disclosure should be determined by the technical spirit of the appended claims.

## Claims

1. A method of updating a service provided by a household appliance, the method comprising:
communicating with a script server to determine whether a script described to provide the service is updated;
downloading an updated script from the script server when the script is updated;
storing the downloaded updated script in a memory; and
executing the updated script stored in the memory.

2. The method of claim 1, wherein the downloading of the updated script from the script server comprises downloading an encrypted updated script from the script server,
wherein the storing of the downloaded updated script in the memory comprises:
decrypting the encrypted updated script; and
storing the updated script in the memory.

3. The method of claim 1 or 2, wherein the communicating with the script server to determine whether the script described to provide the service is updated comprises, after uploading and executing firmware stored in the memory as the household appliance is turned on by receiving power, communicating with the script server to determine whether the script described to provide the service is updated.

4. The method of any one of claims 1 to 3, wherein the communicating with the script server comprises independently communicating, by a loader unit for each of a plurality of services, with the script server, which stores a script for the corresponding service, and
the downloading of the updated script from the script server comprises independently downloading, by the loader unit for each of the plurality of service, an updated script from the script server, which stores the script for the corresponding service.

5. The method of any one of claims 1 to 3, wherein the communicating with the script server comprises communicating, by one loader unit, with the script server, which stores scripts for each of a plurality of services, and
the downloading of the updated script from the script server comprises downloading, by the loader unit, updated scripts from the script server, which stores the scripts for each of the plurality of services.

6. The method of any one of claims 1 to 5, wherein the service is a service which collects logs associated with advertisements, and
the updated script is a newly written script which meets changed requirements for collecting the logs associated with the advertisements.

7. A household appliance comprising:
hardware required to provide a service required by the household appliance;
a communication unit configured to communicate with an external device;
a memory in which firmware and a script are stored; and
at least one processor configured to:
execute the firmware and the script,
control the hardware and the communication unit based on the executed firmware and script to provide a service, and
obtain and execute an updated script associated with the service to provide an updated service.

8. The household appliance of claim 7, wherein the at least one processor is further configured to:
communicate with a script server to determine whether a script described to provide the service is updated;
download the updated script from the script server when the script is updated;
store the downloaded updated script in the memory; and
execute the updated script stored in the memory.

9. The household appliance of claim 8, wherein the at least one processor is further configured to:
decrypt the downloaded updated script; and
store the decrypted downloaded updated script in the memory.

10. The household appliance of claim 8 or 9, wherein the at least one processor is further configured to:
upload and execute firmware stored in the memory when receiving power and then communicate with the script server to determine whether the script described to provide the service is updated.

11. The household appliance of any one of claims 7 to 10, wherein the at least one processor is configured to independently execute a plurality of script-based program modules for providing a plurality of services, and
each of the plurality of script-based program modules comprises:
a loader unit configured to:
communicate with a first script server, which stores script for a first service provided by a corresponding program module,
determine whether a script for the first service is updated, and,
when the script for the first service is updated, obtain the updated script from the first script server, decrypt the acquired script, and store the decrypted script in the memory; and
an execution unit configured to obtain and execute the script stored in the memory to provide the first service.

12. The household appliance of claim 11, wherein the loader unit is further configured to transmit a signal notifying that the updated script is present to the execution unit, and
wherein, when the execution unit receives the signal notifying that the updated script is present, the execution unit is configured to acquire and execute the script stored in the memory to provide an updated first service.

13. The household appliance of any one of claims 7 to 12, wherein the at least one processor is configured to independently execute a plurality of script-based program modules for providing a plurality of services and a loader program module,
wherein the loader program module is configured to:
communicate with a second script server, which stores scripts for each of a plurality of services,
determine whether the scripts for each of the plurality of services are updated, and
when the updated script is present among the scripts for the plurality of services, independently obtain the updated script from the second script server,
decrypt the obtained updated script, and
store the decrypted script in the memory, and
wherein each of the plurality of script-based program modules comprises an execution unit configured to obtain and execute the script stored in the memory to provide the service.

14. The household appliance of claim 13, wherein the loader program module is further configured to transmit a signal notifying the presence of an updated script to a first script-based program module, which provides a first service corresponding to the updated script, among the plurality of script-based program modules, and
when receiving the signal notifying the presence of the updated script, the execution unit of the first script-based program modules is configured to obtain and execute the script stored in the memory to provide an updated service.

15. The household appliance of any one of claims 7 to 14, wherein the service is a service which collects logs associated with advertisements, and
the updated script is a newly written script which meets changed requirements for collecting the logs associated with the advertisements.
